# EUROPEAN PATENT APPLICATION

(11) **EP 4 654 000 A1**
(43) Date of publication of application: **26.11.2025**
(21) Application number: 25176369.4
(22) Date of filing: 14.05.2025
(51) Int. Cl.: G06F 3/14, G06F 12/0844, G06T 19/00, G09B 5/10

(54) **REMOTE CONTROL METHOD AND REMOTE CONTROL SYSTEM**

(30) Priority: 24.05.2024 TW 113119218
(71) Applicant: Optoma Coporation, New Taipei City 231633 (TW)
(72) Inventor: KAO, Chao-Ting, 231633 New Taipei City (TW)
(74) Representative: Ter Meer Steinmeister & Partner

(57) **Abstract**

A remote control method and a remote control system are provided. A main block page is displayed through a management apparatus. In response to the management apparatus performing a behavior change on a first object on the main block page, a control instruction is sent through the management apparatus. A sub-block page is displayed through a controlled apparatus. The main block page and the sub-block page have a linkage relationship, and the sub-block page includes a second object associated with the first object. In response to the controlled apparatus receiving the control instruction, the behavior change is performed on the second object on the sub-block page.

## Description

This application claims the priority of Taiwan application serial no. 113119218, filed on May 24, 2024.

### BACKGROUND

### Technical Field

The disclosure relates to a control method and a control system, and particularly relates to a remote control method and a remote control system.

### Related Art

In current application scenarios, in order to simultaneously perform other extended applications (such as sending emails and locking screens) on different objects in multiple slides (for example, for presentation in a Microsoft PowerPoint file) or simultaneously transform objects on different pages (for example, hiding, adjusting layer positions, and zooming in and out), it is required to select the corresponding objects multiple times to repeatedly perform the desired applications. If there are many objects located on different pages, repeating such operations will inevitably take a lot of time and effort.

The information disclosed in this Background section is only for enhancement of understanding of the background of the described technology and therefore it may contain information that does not form the prior art that is already known to a person of ordinary skill in the art. Further, the information disclosed in the Background section does not mean that one or more problems to be resolved by one or more embodiments of the disclosure was acknowledged by a person of ordinary skill in the art.

### SUMMARY

Other objectives, features and advantages of the disclosure will be further understood from the further technological features disclosed by the embodiments of the disclosure wherein there are shown and described preferred embodiments of this disclosure, simply by way of illustration of modes best suited to carry out the disclosure.

The object is solved by the features of the independent claims. Preferred embodiments are given in the dependent claims.

To achieve one or part or all of the above objectives or other objectives, a remote control method according to an embodiment of the disclosure includes the following. A main block page is displayed through a management apparatus. A control instruction is sent through the management apparatus in response to the management apparatus performing a behavior change on a first object on the main block page. A sub-block page is displayed through a controlled apparatus, in which the main block page and the sub-block page have a linkage relationship, and the sub-block page includes a second object associated with the first object. The behavior change is performed on the second object on the sub-block page through the controlled apparatus in response to the controlled apparatus receiving the control instruction.

In one or embodiments, the remote control method may further include: sending an invitation code corresponding to the sub-block page by the management apparatus; requesting to obtain the sub-block page according to the invitation code by the controlled apparatus; and displaying the sub-block page through the controlled apparatus.

In one or more embodiments, the remote control method may further include executing a remote control program through the management apparatus.

In one or more embodiments, the executing of the remote control program through the management apparatus may be performed to: create the main block page, in which the main block page includes a plurality of controllable objects; create the sub-block page with a same architecture as the main block page, and respectively generate a plurality of controlled objects based on the controllable objects, in which types of the controlled objects respectively correspond to types of the controllable objects; generate an invitation code corresponding to the sub-block page; and establish the linkage relationship between the sub-block page and the main block page, so that the controlled objects are respectively associated with the controllable objects, in which the first object is one of the controllable objects, and the second object is one of the controlled objects.

In one or more embodiments, the remote control method may further include: creating a plurality of sub-block pages corresponding to a plurality of groups, through the management apparatus.

In one or more embodiments, the content of the controlled objects included on one of the sub-block pages may be different from content of the controlled objects included on another sub-block page.

In one or more embodiments, the behavior change may include at least one of adjustment of an object position, adjustment of an object size, adjustment of a font format, and triggering of a hyperlink.

In one or more embodiments, a designated area may be set on the main block page.

In one or more embodiments, the sub-block page may include an editable area corresponding to the designated area.

In one or more embodiments, the remote control method may further include: performing an unlocking operation on the designated area on the main block page through the management apparatus, and sending an unlocking instruction; and enabling an input permission of the editable area on the sub-block page in response to the controlled apparatus receiving the unlocking instruction, to receive a user input through the editable area.

In one or more embodiments, the remote control method may further include: providing a collaboration platform interface through a cloud server; inputting management account information through the management apparatus to log in to the collaboration platform interface of the cloud server, and through the collaboration platform interface in the management apparatus, enabling the cloud server to read and execute a remote control program stored in the cloud server to: create the main block page and the sub-block page, and generate an invitation code corresponding to the sub-block page; store the main block page, the sub-block page, and the invitation code in the cloud server; send the invitation code to the controlled apparatus through the cloud server; request to obtain the sub-block page according to the invitation code through the controlled apparatus; display the sub-block page according to the invitation code through the controlled apparatus; and display the main block page through the management apparatus.

A remote control system according to an embodiment of the disclosure includes: a management apparatus and at least one controlled apparatus. The management apparatus includes: at least one first processor, a first display, and a first communication device, in which the at least one first processor is electrically connected to the first display and the first communication device respectively. The first display is configured to display a main block page, and in response to the at least one first processor of the management apparatus being configured to perform a behavior change on a first object on the main block page, the first communication device of the management apparatus is configured to send a control instruction. The controlled apparatus includes: at least one second processor, a second display, and a second communication device, in which the at least one second processor is electrically connected to the second display and the second communication device respectively. The second display is configured to display a sub-block page, in which the main block page and the sub-block page have a linkage relationship, and the sub-block page includes a second object associated with the first object. In response to the second communication device of the controlled apparatus being configured to receive the control instruction, the at least one second processor is configured to perform the behavior change on the second object on the sub-block page.

In one or more embodiments, the first communication device of the management apparatus may be configured to send an invitation code corresponding to the sub-block page.

In one or more embodiments, the at least one controlled apparatus may be configured to request to obtain the sub-block page according to the invitation code, and the second display of the at least one controlled apparatus is configured to display the sub-block page.

In one or more embodiments, the at least one first processor of the management apparatus may be configured to execute a remote control program to: create the main block page.

In one or more embodiments, the main block page may include a plurality of controllable objects.

In one or more embodiments, the at least one first processor of the management apparatus may be configured to create the sub-block page with a same architecture as the main block page, and generate a plurality of controlled objects based on the controllable objects, in which types of the controlled objects respectively correspond to types of the controllable objects; generate an invitation code corresponding to the sub-block page; and establish the linkage relationship between the sub-block page and the main block page, so that the controlled objects are respectively associated with the controllable objects, in which the first object is one of the controllable objects, and the second object is one of the controlled objects.

In one or more embodiments, the at least one first processor of the management apparatus may be configured to execute the remote control program to further: create a plurality of sub-block pages corresponding to a plurality of groups, in which content of the controlled objects included on one of the sub-block pages is different from content of the controlled objects included on another sub-block page.

In one or more embodiments, the behavior change may include at least one of adjustment of an object position, adjustment of an object size, adjustment of a font format, and triggering of a hyperlink.

In one or more embodiments, a designated area may be set on the main block page.

In one or more embodiments, the sub-block page may include an editable area corresponding to the designated area.

In one or more embodiments, the at least one first processor of the management apparatus may be configured to perform an unlocking operation on the designated area on the main block page.

In one or more embodiments, the first communication device of the management apparatus may be configured to send an unlocking instruction.

In one or more embodiments, in response to the second communication device of the at least one controlled apparatus being configured to receive the unlocking instruction, the at least one second processor of the at least one controlled apparatus may be configured to enable an input permission of the editable area on the sub-block page, to receive a user input through the editable area.

In one or more embodiments, the remote control system may further include a cloud server.

In one or more embodiments, the cloud server may include at least one third processor, a third storage, and a third communication device.

In one or more embodiments, the at least one third processor may be electrically connected to the third storage and the third communication device respectively.

In one or more embodiments, the cloud server may be configured to provide a collaboration platform interface.

In one or more embodiments, the cloud server may be communicatively connected to the management apparatus and the at least one controlled apparatus respectively.

In one or more embodiments, the management apparatus may be configured to input management account information to log in to the collaboration platform interface of the cloud server.

In one or more embodiments, the cloud server may be configured to read and execute a remote control program stored in the third storage of the cloud server to: create the main block page and the sub-block page, and generate an invitation code corresponding to the sub-block page; and store the main block page, the sub-block page, and the invitation code in the third storage of the cloud server.

In one or more embodiments, the third communication device of the cloud server may send the invitation code to the controlled apparatus.

In one or more embodiments, the controlled apparatus may request to obtain the sub-block page according to the invitation code.

In one or more embodiments, the second display of the controlled apparatus may display the sub-block page according to the invitation code.

In one or more embodiments, the first display of the management apparatus may display the main block page.

A non-transitory processor-readable storage medium according to an embodiment of the disclosure is readable by at least one processor and configured to store a remote control program. The at least one processor is configured to read and execute the remote control program to: display a main block page through a management apparatus; send a control instruction through the management apparatus in response to the management apparatus performing a behavior change on a first object on the main block page; display a sub-block page through a controlled apparatus, in which the main block page and the sub-block page have a linkage relationship, and the sub-block page includes a second object associated with the first object; and perform the behavior change on the second object on the sub-block page through the controlled apparatus in response to the controlled apparatus receiving the control instruction.

Based on the above, the disclosure simplifies the behavior change for objects on different pages. The behavior change can be simultaneously performed on the sub-block page by performing the behavior change on the main block page only once, which avoids repetition of the operation, makes it easy to perform the operation, and allows the teacher to pay more attention on the courses.

### BRIEF DESCRIPTION OF THE DRAWINGS

FIG. 1 is a schematic diagram of the remote control system of an embodiment of the disclosure.
FIG. 2 is a flowchart of the remote control method according to an embodiment of the disclosure.
FIG. 3 is a schematic diagram of the remote control process of an embodiment of the disclosure.
FIG. 4 a schematic diagram of the remote control process of another embodiment of the disclosure.
FIG. 5 is a schematic diagram of the process of creating a teaching material file according to an embodiment of the disclosure.
FIG. 6 is a schematic diagram of the course editing interface of an embodiment of the disclosure.
FIG. 7 is a schematic diagram of the main block page of an embodiment of the disclosure.
FIG. 8 is a schematic diagram of the sub-block page according to an embodiment of the disclosure.
FIG. 9 is a schematic diagram of the sub-block page according to an embodiment of the disclosure.
FIG. 10 is a schematic diagram of the main block page of an embodiment of the disclosure.
FIG. 11A to FIG. 11C are schematic diagrams of the behavior change according to an embodiment of the disclosure.

### DESCRIPTION OF THE EMBODIMENTS

The aforementioned and other technical content, features, and effects of the disclosure will be presented in the following detailed description of an exemplary embodiment with reference to the accompanying drawings. The directional terms mentioned in the following embodiments, such as up, down, left, right, front, and back, are only referenced to the directions in the accompanying drawings. Therefore, the directional terms used are for explanatory purposes and not intended to limit the disclosure. It is to be understood that other embodiment may be utilized and structural changes may be made without departing from the scope of the disclosure. Also, it is to be understood that the phraseology and terminology used herein are for the purpose of description and should not be regarded as limiting. The use of "including," "comprising," or "having" and variations thereof herein is meant to encompass the items listed thereafter and equivalents thereof as well as additional items. Unless limited otherwise, the terms "connected," "coupled," and "mounted," and variations thereof herein are used broadly and encompass direct and indirect connections, couplings, and mountings.

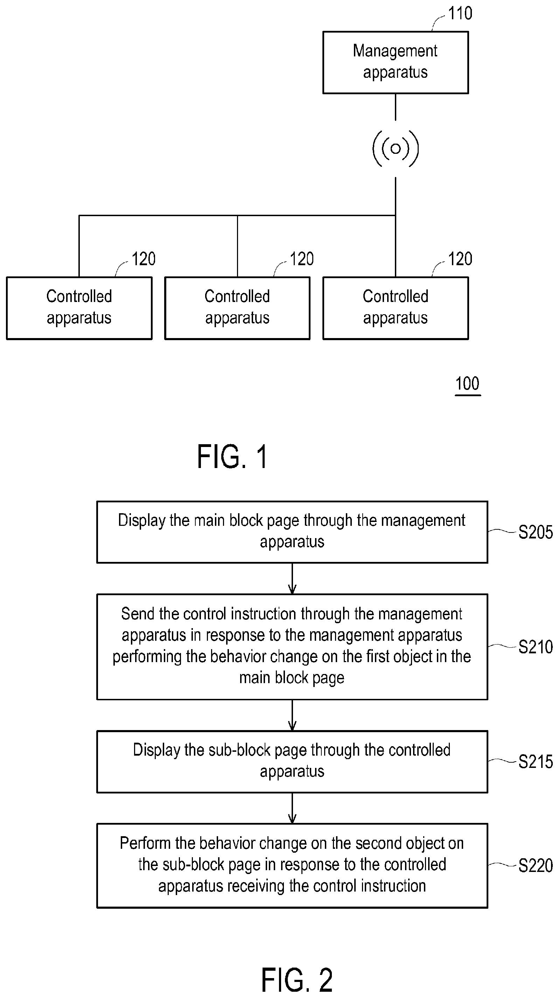

FIG. 1 is a schematic diagram of the remote control system according to an embodiment of the disclosure. Referring to FIG. 1, a remote control system 100 includes a management apparatus 110 and a controlled apparatus 120. The disclosure is not intended to limit the number of the controlled apparatuses 120.

The management apparatus 110 and the controlled apparatus 120 are communicatively connected through a network in a wired or wireless manner. In an embodiment, the management apparatus 110 includes at least one processor, a storage, a display, and a communication device, with the at least one processor electrically connected to the storage, the display, and the communication device. Similarly, the controlled apparatus 120 includes at least one processor, a storage, a display, and a communication device, with the at least one processor electrically connected to the storage, the display, and the communication device. The management apparatus 110 may be, for example, an interactive flat panel display, a smartphone, a tablet, or a laptop computer. Similarly, the controlled apparatus 120 may be an interactive flat panel display, a smartphone, a tablet, or a laptop computer.

The processor may be, for example, a central processing unit (CPU), a physics processing unit (PPU), a programmable microprocessor, an embedded control chip, a digital signal processor (DSP), an application specific integrated circuit (ASIC), or other similar devices.

The storage may be implemented using any type of fixed or removable random access memory (RAM), hard disk, other similar devices, or a combination of these devices. The storage may be, for example, a non-transitory storage medium that is readable by at least one processor and stores at least one program. After being installed, the at least one program is read and executed by at least one electrically connected processor to implement corresponding functions, wherein the at least one program refers to the programs mentioned in the following description. In addition, the management apparatus, controlled apparatus, and cloud server may also have a read-only memory (ROM) and a flash memory, respectively.

The communication device may be a chip or a circuit adopting local area network (LAN) technology, wireless LAN (WLAN) technology, or mobile communication technology. The local area network may be, for example, Ethernet. The wireless LAN may be, for example, Wi-Fi. The mobile communication technology may be, for example, Global System for Mobile Communications (GSM), third-Generation (3G) communication technology, fourth-Generation (4G) communication technology, fifth-Generation (5G) communication technology, etc.

The display may be, for example, a light emitting diodes display (LED display), a liquid crystal display (LCD), an organic light emitting diodes display (OLED display), etc.

FIG. 2 is a flowchart of the remote control method according to an embodiment of the disclosure. Referring to FIG. 1 and FIG. 2, in step S205, a main block page is displayed through the display of the management apparatus 110. In step S210, in response to at least one processor of the management apparatus 110 performing a behavior change on a first object (controllable object) on the main block page, a control instruction is sent through the communication device of the management apparatus 110. In step S215, a sub-block page is displayed through the display of the controlled apparatus 120. The main block page and the sub-block page have a linkage relationship, and the sub-block page includes a second object (controlled object) associated with the first object. In step S220, in response to the communication device of the controlled apparatus 120 receiving the control instruction, at least one processor of the controlled apparatus 120 performs the behavior change on the second object on the sub-block page. In actual applications, the manager may control the display content of other controlled apparatuses 120 through the management apparatus 110. That is, when the manager triggers a behavior change on the main block page through the management apparatus 110, the management apparatus 110 may control the controlled apparatus 120 to perform the same behavior change on the sub-block page displayed by the controlled apparatus 120. After the behavior change, the main block page displayed by the management apparatus 110 and the sub-block page displayed by the controlled apparatus 120 are different.

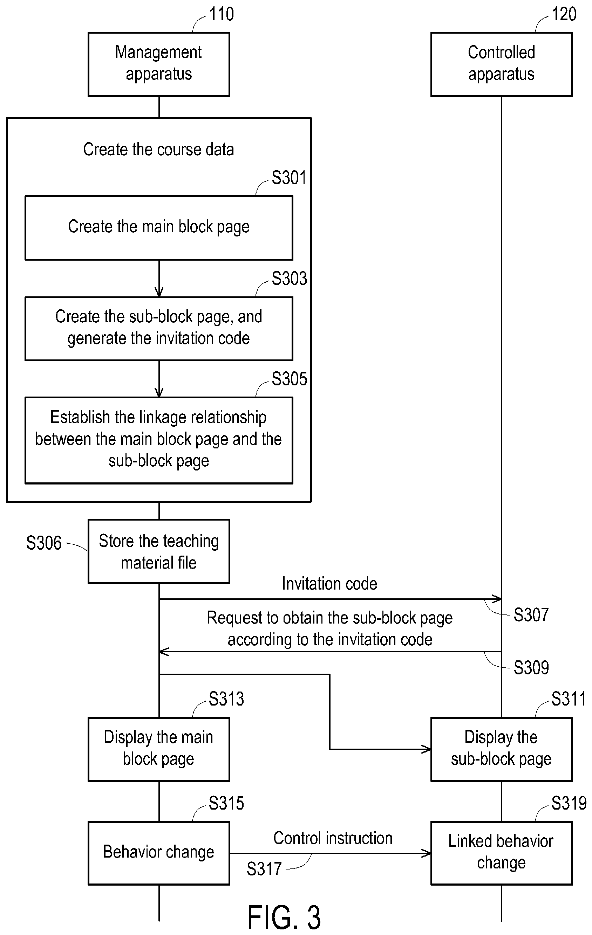

FIG. 3 is a schematic diagram of the remote control process according to an embodiment of the disclosure. First, the communication device of the management apparatus 110 and the communication device of at least one controlled apparatus 120 are communicatively connected through a network in a wired or wireless manner. The management apparatus 110 creates a teaching material file through a course editing interface, including steps S301, S303, and S305. In step S301, the management apparatus 110 creates a main block page through the course editing interface. The main block page includes multiple controllable objects. In step S303, the management apparatus 110 creates a sub-block page through the course editing interface, and generates an invitation code corresponding to the sub-block page. Specifically, the management apparatus 110 creates a sub-block page with the same architecture (for example, block placement position) as the main block page through the course editing interface, and generates multiple controlled objects based on the controllable objects. The types of the controlled objects correspond to the types of the controllable objects, respectively. After completing the sub-block page, the management apparatus 110 generates the invitation code corresponding to the sub-block page. In step S305, a linkage relationship is established between the sub-block page and the main block page, and the linkage relationship includes a behavior change. For example, one object on the main block page is moved (behavior change) and the other object on the sub-block page is also moved (behavior change), which is called a linkage relationship between the sub-block page and the main block page. The first object is one of the controllable objects, and the second object is one of the controlled objects. Then, in step S306, the management apparatus 110 stores the teaching material file in the storage.

In terms of application to educational scenarios, a remote control program is installed in the management apparatus 110 and stored in the storage. At least one processor of the management apparatus 110 reads and executes the remote control program stored in the storage to perform the remote control method of the disclosure, as shown in the following steps.

First, at least one processor of the management apparatus 110 executes the remote control program to generate the course editing interface, and the display of the management apparatus 110 displays the course editing interface. The manager (teacher) may create a teaching material file in the course editing interface, and store the teaching material file in the storage of the management apparatus 110. This teaching material file includes a main block page for use by the teacher and a sub-block page for use by a user (student). The number of sub-block pages may be set according to the number of students (each student uses one sub-block page), or multiple students may be grouped first, and the number of sub-block pages may be determined according to the number of groups (students in one group use the same sub-block page). Moreover, the teacher uses at least one processor of the management apparatus 110 to preset multiple invitation codes respectively corresponding to multiple sub-block pages, that is, to generate one corresponding invitation code for each sub-block page.

Next, in step S307, the management apparatus 110 sends the invitation code to the controlled apparatus 120. In step S309, the controlled apparatus 120 requests to obtain the sub-block page according to the invitation code. Then, in step S311, according to the invitation code, the display of the controlled apparatus 120 displays the sub-block page. In the above-described embodiment applied to educational scenarios, the management apparatus 110 may send the invitation code to students attending the meeting via email. The students who receive the email may click on the link in the email using the controlled apparatuses 120 to obtain the sub-block page stored in the management apparatus 110, and enable the displays of the controlled apparatuses 120 to display the sub-block page. Alternatively, the students who receive the email may use the controlled apparatuses 120 to connect to the connection interface provided by the management apparatus 110 to input the invitation code, thereby obtaining the sub-block page stored in the management apparatus 110 and enabling the displays of the controlled apparatuses 120 to display the sub-block page. Thus, according to the invitation code, students can see the sub-block page corresponding to their group on the displays of the controlled apparatuses 120 they are using.

In step S313, the main block page is displayed on the display of the management apparatus 110. Then, in step S315, at least one processor of the management apparatus 110 generates a behavior change on the main block page, and in step S317, based on the behavior change, at least one processor of the management apparatus 110 generates a control instruction corresponding to the behavior change, and sends the control instruction to the controlled apparatus 120 through the communication device. In step S319, in response to the communication device of the controlled apparatus 120 receiving the control instruction, at least one processor of the controlled apparatus 120 generates a linked behavior change on the sub-block page displayed on the display of the controlled apparatus 120.

In the above-described embodiment applied to educational scenarios, the teacher may make a behavior change to the controllable objects on the main block page on the management apparatus 110, thereby causing the corresponding controlled objects on the sub-block page displayed on the controlled apparatus 120 to undergo a linked behavior change. The behavior change may include, for example, adjustment of an object position, adjustment of an object size, adjustment of a font format, and triggering of a hyperlink. For example, when the teacher adjusts the size of the first object (controllable object) on the main block page on the display of the management apparatus 110, the student sees that the corresponding second object (controlled object) on the sub-block page on the display of the controlled apparatus 120 also undergoes size adjustment. In an embodiment, the content of the first object and the content of the second object are different, and the contents of the second objects, which have a linkage relationship with the first object, on different sub-block pages are also different. Specifically, the teacher may create multiple sub-block pages corresponding to multiple groups through the management apparatus 110, and the content (such as images or text) of the controlled objects included on one of the sub-block pages is different from the content of the controlled objects included on another sub-block page.

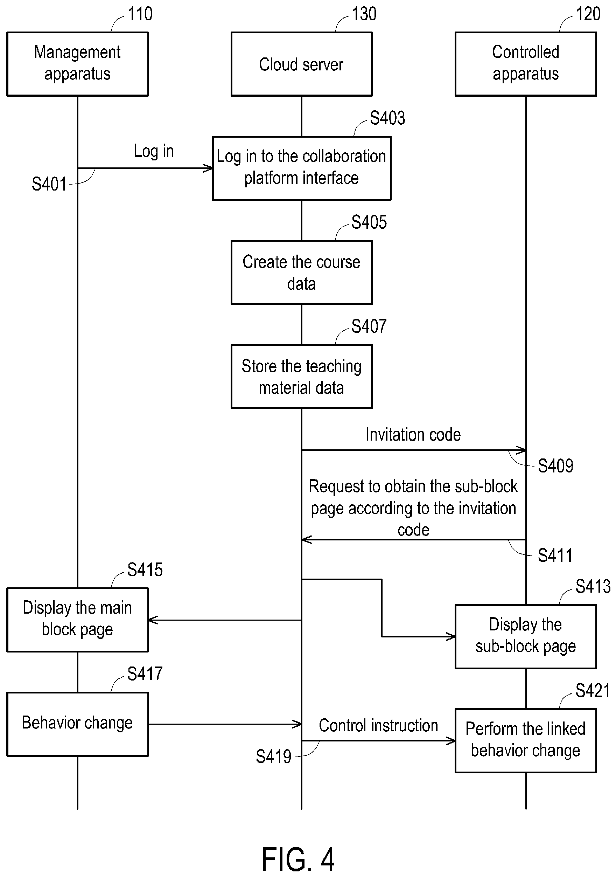

FIG. 4 is a schematic diagram of the remote control process according to another embodiment of the disclosure. In this embodiment, the remote control system 100 further includes a cloud server 130. The cloud server 130 includes at least one processor, a storage, and a communication device, with the at least one processor electrically connected to the storage and the communication device. The cloud server 130 includes a collaboration platform interface. The collaboration platform interface may include at least one web page, and at least one processor of the cloud server 130 executes a collaboration platform program to generate the collaboration platform interface.

First, the communication device of the management apparatus 110, the communication device of the controlled apparatus 120, and the communication device of the cloud server 130 are communicatively connected through a network using a wired or wireless transmission protocol. In step S401, management account information (such as account name and password) is input through the management apparatus 110, and in step S403, the management apparatus 110 uses the management account information to log in to the collaboration platform interface of the cloud server 130.

Step S405 includes steps S301 to S305 of FIG. 3. The difference is that the remote control program is stored in the storage of the cloud server 130, and is read and executed by at least one processor of the cloud server 130. Specifically, the management apparatus 110, through the collaboration platform interface, enables at least one processor of the cloud server 130 to read and execute the remote control program stored in the storage of the cloud server 130, to generate a course editing interface, and the display of the management apparatus 110 displays the course editing interface. The management apparatus 110 creates a teaching material file through the course editing interface of the cloud server 130. For example, the management apparatus 110 creates the main block page and the sub-block page through the course editing interface, and generates an invitation code corresponding to the sub-block page. Further, the management apparatus 110 establishes a linkage relationship between the sub-block page and the main block page through the course editing interface. The above steps are all achieved by at least one processor of the cloud server 130 by executing the remote control program.

Then, in step S407, the created teaching material file (including the main block page, the sub-block page, and the corresponding invitation code) are stored in the storage of the cloud server 130. Next, in step S409, the cloud server 130 sends the invitation code to the controlled apparatus 120.

Thereafter, in step S411, the controlled apparatus 120 requests to obtain the sub-block page according to the invitation code, and in step S413, according to the invitation code, the display of the controlled apparatus 120 displays the sub-block page. For example, the controlled apparatus 120 is communicatively connected to the collaboration platform interface provided by the cloud server 130, inputs the invitation code through the collaboration platform interface, and thereby obtains the sub-block page. Alternatively, the controlled apparatus 120 opens an email with the invitation code, and clicks on or triggers a related link in the email, to be directly communicatively connected to the collaboration platform interface provided by the cloud server 130, and to obtain the sub-block page through the collaboration platform interface. Then, the display of the controlled apparatus 120 displays the sub-block page.

In step S415, the display of the management apparatus 110 displays the main block page. Then, in step S417, at least one processor of the management apparatus 110 generates a behavior change on the main block page, and sends the behavior change to the cloud server 130. Next, in step S419, based on the behavior change, at least one processor of the cloud server 130 generates a control instruction corresponding to the behavior change, and the communication device sends the control instruction to the controlled apparatus 120. Further, in step S421, in response to the communication device of the controlled apparatus 120 receiving the control instruction, at least one processor of the controlled apparatus 120 generates a linked behavior change on the sub-block page displayed on the display of the controlled apparatus 120.

In terms of application to educational scenarios, the collaboration platform interface provided by the cloud server 130 allows the manager and users to enter the same meeting. For example, the teacher and multiple students respectively use the management apparatus 110 and multiple controlled apparatuses 120 to log in to the collaboration platform interface.

In another embodiment, the teacher and each student may install a login application (Login APP) on the management apparatus 110 and the controlled apparatus 120, and log in to the collaboration platform interface by executing the login application with at least one processor of the management apparatus 110 and at least one processor of the controlled apparatus 120. Alternatively, the teacher and each student may also use the management apparatus 110 and the controlled apparatus 120 to open a web browser to log in to the collaboration platform interface.

In an embodiment, the teacher uses the remote control program executed on the management apparatus 110 to create a main block page and sub-block pages in advance, and generate different invitation codes corresponding to the sub-block pages. The invitation codes are sent to the students participating in the meeting through the collaboration platform interface or email, which allows the students to use the invitation codes to enter the cloud server 130 and obtain the sub-block pages corresponding to the invitation codes. Thereby, the students can see the sub-block pages corresponding to their own groups on the displays of the controlled apparatuses 120 they are using.

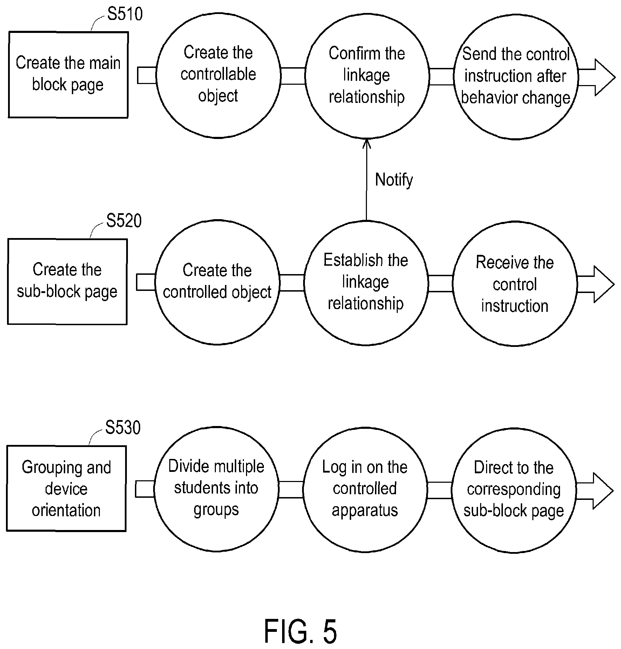

FIG. 5 is a schematic diagram of the process of creating a teaching material file according to an embodiment of the disclosure. This embodiment is described in the context of an educational scenario. Referring to FIG. 5, in step S510, a main block page is created. In step S520, a sub-block page is created. In step S530, grouping and device orientation are performed.

Regardless of whether the course editing interface is generated by the remote control program executed by the management apparatus 110 or the remote control program executed by the cloud server 130, the following steps are performed through the course editing interface. As shown in step S510, the course editing interface is used to create a main block page. For example, a new teaching material file is added through the course editing interface, and the main block page is created in the teaching material file. Then, controllable objects (such as images, links, and text) needed in the course are set on the main block page.

Next, as shown in step S520, based on the number of groups to be divided for this teaching material file, sub-block pages with the same architecture as the main block page are added correspondingly in the teaching material file through the course editing interface. The teaching material file includes the main block page and at least one sub-block page. For example, assuming that the teaching material file includes two groups, two pages are added under the main block page as sub-block pages, and invitation codes (for example, first invitation code and second invitation code) corresponding to the two sub-block pages are generated. Controlled objects of the same type as the controllable objects on the main block page (such as images, links, and text) are added to each sub-block page. Then, on the sub-block page, linkage relationships between the controlled objects and the controllable objects of the main block page are established, so that each controlled object is associated with the corresponding controllable object, and the main block page is notified to confirm the linkage relationships. For example, linkage relationships with the main block page are established on the sub-block pages, and then confirmed by the main block page. The content of the controlled objects included on one of the sub-block pages is different from the content of the controlled objects included on other sub-block pages.

Here, the teacher may use the course editing interface to set the corresponding controllable object on the main block page that is to establish a linkage relationship with the controlled object on the sub-block page. For example, in the course editing interface, the teacher may click the right mouse button or quickly double-click the left mouse button on a controlled object on the sub-block page to call up a menu, and select the main block page to be linked with in the menu. Once the main block page is selected, the screen switches to the selected main block page for the teacher to choose the corresponding controllable object on the main block page, thereby completing the setting of the linkage relationship between the controlled object on the sub-block page and the controllable object on the main block page.

Another example is provided below, based on a main block page that includes two controllable objects and two sub-block pages that each include two controlled objects. It is assumed here that the code corresponding to the main block page is "Main01"; the codes corresponding to the two objects on the main block page are "Main_01_01" and "Main_01_02"; the codes corresponding to the two sub-block pages are "Sub _01" and "Sub_02"; the codes corresponding to the two objects included on the sub-block page with the code "Sub _01" are "Sub_01_01" and "Sub_01_02"; and the codes corresponding to the two objects included on the sub-block page with the code "Sub_02" are " Sub_02_01" and "Sub_02_02". The linkage relationships between the controllable objects and the controlled objects are as follows: controllable object "Main_01_01" is linked with controlled objects "Sub_01_01" and "Sub_02_01"; and controllable object "Main_01_02" is linked with controlled objects "Sub_01_02" and "Sub_02_02". However, this is merely an example, and the disclosure is not limited thereto.

After the linkage relationship is established, if a behavior change is made to the first object (one of the controllable objects) that has been linked on the main block page, the management apparatus 110 or the cloud server 130 generates a corresponding control instruction based on this behavior change, and sends the control instruction to the controlled apparatus 120, so that the corresponding second object (one of the controlled objects) currently displayed on the sub-block page of the controlled apparatus 120 also undergoes the same behavior change. For example, based on the behavior change performed on the controllable object "Main_01_01", the same behavior change is also performed on the controlled objects "Sub_01_01" and "Sub_02_01".

In step S530, multiple students are divided into groups. Here, the students may be grouped manually or by other grouping methods. The students assigned to the same group receive the same invitation code (one group uses one sub-block page). Accordingly, the students in the same group may use one or more controlled apparatuses to log in separately and be directed to the sub-block page corresponding to the invitation code.

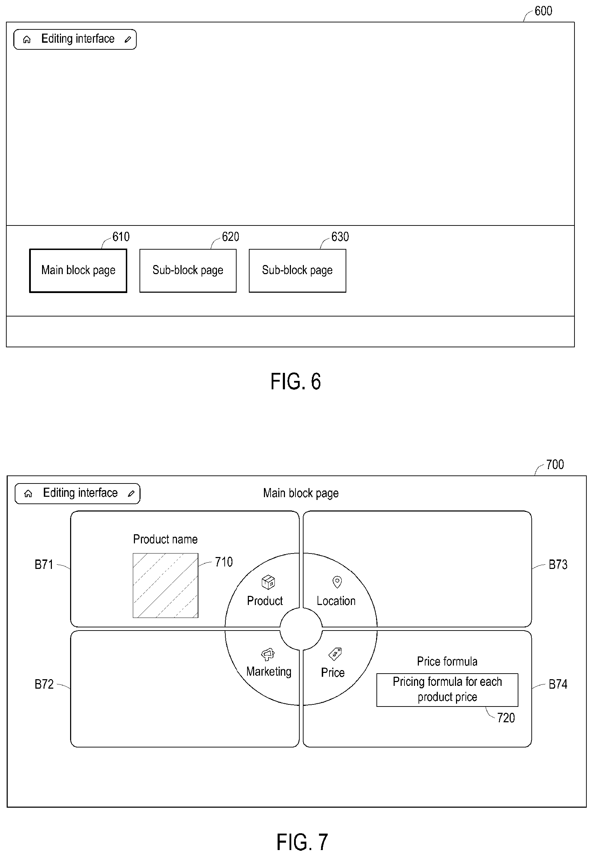

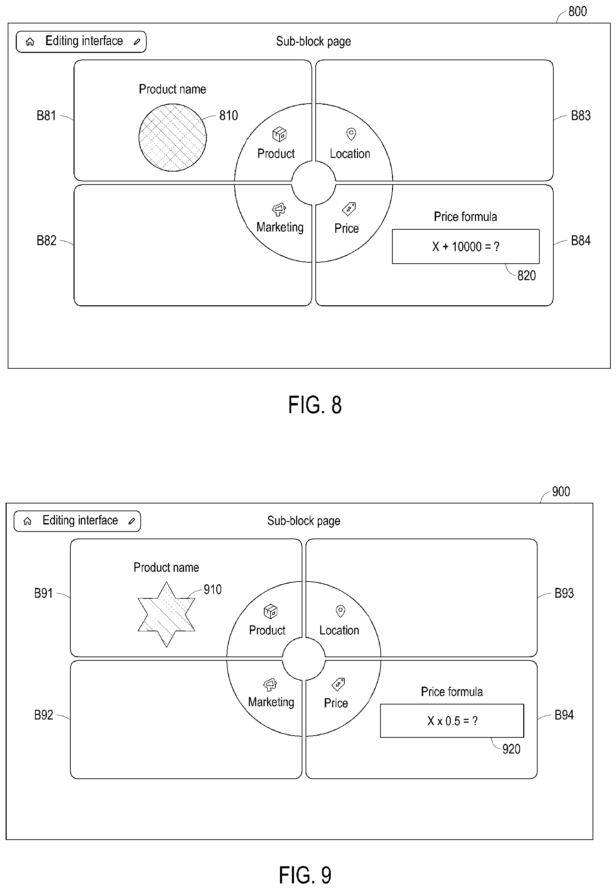

FIG. 6 is a schematic diagram of the course editing interface according to an embodiment of the disclosure. FIG. 7 is a schematic diagram of the main block page according to an embodiment of the disclosure. FIG. 8 is a schematic diagram of the sub-block page according to an embodiment of the disclosure. FIG. 9 is a schematic diagram of the sub-block page according to an embodiment of the disclosure.

In an embodiment, students are divided into one group (first group), and one or more controlled apparatuses 120 are prepared for the first group. The first group uses the same invitation code to enter the corresponding sub-block page.

In this embodiment, before class, students are divided into two groups (first group and second group), and one or more controlled apparatuses 120 are prepared for each group. Each group uses the same invitation code to enter the corresponding sub-block page.

Referring to FIG. 6, a teaching material file is created through a course editing interface 600. In the editing stage, the teaching material file includes a main block page 610 and at least one sub-block page 620. In this embodiment, after creating the main block page 610, the sub-block page 620 corresponding to the first group, and the sub-block page 630 corresponding to the second group in the same teaching material file, corresponding options 610, 620, and 630 are generated in the course editing interface 600. In response to the option 610 being selected, a main block page 700 as shown in FIG. 7 is displayed in the course editing interface 600. In response to the option 620 being selected, a sub-block page 800 (corresponding to the first group) as shown in FIG. 8 is displayed in the course editing interface 600. In response to the option 630 being selected, a sub-block page 900 (corresponding to the second group) as shown in FIG. 9 is displayed in the course editing interface 600.

The course editing interface 600 further generates corresponding invitation codes (first invitation code and second invitation code) respectively for the sub-block page 800 and the sub-block page 900. According to the first invitation code and the second invitation code, the corresponding sub-block page 800 and sub-block page 900 are displayed on the controlled apparatuses 120 respectively used by the first group and the second group.

The entire teaching material file is prepared in advance, and the interactions between the sub-block pages 800 and 900 and the main block page 700 have been set to establish the linkage relationships. The content of the sub-block pages 800 and 900 each contains a different product description. Before the class begins, students log in to the cloud server 130 through the controlled apparatuses 120 corresponding to each group, according to the invitation codes for the sub-block pages 800 and 900. After logging in to the cloud server 130, the controlled apparatuses 120 automatically display the sub-block pages 800 and 900 corresponding to the respective invitation codes.

The main block page 700 shown in FIG. 7 is created by the teacher during preparation of the teaching material file. For example, blocks B71, B72, B73, and B74 are set on the main block page 700, with a controllable object 710 set in the block B71 and a controllable object 720 set in the block B74.

After completing the main block page 700, the teacher further creates the sub-block pages 800 and 900 with the same architecture (having 4 blocks) as the main block page 700. The sub-block pages 800 and 900 each have four blocks.

Next, the teacher places different controlled objects 810 and 910 (for example, product images corresponding to product names) and controlled objects 820 and 920 (for example, formula columns corresponding to price formulas) in the blocks (B81, B91 and B84, B94) of the sub-block pages 800 and 900 that correspond to the main block page 700.

Specifically, referring to FIG. 8, blocks B81, B82, B83, and B84 are set on the sub-block page 800 corresponding to the architecture of the main block page 700, with the controlled object 810 set in the block B81, and the controlled object 820 set in the block B84. Referring to FIG. 9, blocks B91, B92, B93, and B94 are set on the sub-block page 900 corresponding to the architecture of the main block page 700, with the controlled object 910 set in the block B91, and the controlled object 920 set in the block B94.

Additionally, if the teacher wants to make fine adjustment to the content of the teaching material file, such as hiding the product images under the product names and then displaying the product images as the course progresses, and adjusting the font format of the formula column (for example, changing color and bold emphasis) and other behavior changes, such behavior changes only need to be set on the main block page 700, and can be applied to the corresponding controlled objects on the sub-block pages 800 and 900 in a linked manner. Specifically, on the main block page 700, the controllable object 710 is set to hide for a period of time and then display. For the controllable object 720, the text color is changed and set to display in bold. In response to the behavior changes made on the main block page 700 (changes made to the controllable objects), corresponding behavior changes are also performed on the sub-block pages 800 and 900. That is, on the sub-block page 800, the controlled object 810 is hidden for a period of time and then displayed. On the sub-block page 800, the text color of the controlled object 820 is synchronously adjusted and displayed in bold. On the sub-block page 900, the controlled object 910 is hidden for a period of time and then displayed. On the sub-block page 900, the text color of the controlled object 920 is synchronously adjusted and displayed in bold.

In an embodiment, the behavior change may take place during preparation of the teaching material file before the class, or in another embodiment, the behavior change may take place during the actual teaching, so as to simplify the operation process for the teacher.

Additionally, the teacher may also set a hyperlink for the controllable object 710 on the main block page 700, thereby linking with the hyperlink of the controlled object 810 on the sub-block page 800 and the controlled object 910 on the sub-block page 900.

When the teacher performs behavior changes on the controllable objects 710 and 720 on the main block page 700 during teaching, the controlled objects 810 and 820 on the sub-block page 800 of the first group also undergo the same behavior changes. This may deepen the students' attention and impression on their own group's product.

In another embodiment, when the teacher performs behavior changes on the controllable objects 710 and 720 on the main block page 700 during teaching, the controlled objects 810 and 910 and the controlled objects 820 and 920 on the sub-block page 800 of the first group and the sub-block page 900 of the second group also undergo the same behavior changes. This may deepen the students' attention and impression on their own groups' products.

In an embodiment, the main block page 700 has a designated area, and the sub-block page 800 has an editable area corresponding to the designated area. At least one processor of the management apparatus 110 performs an unlocking operation on the designated area on the main block page 700, and the communication device of the management apparatus 110 sends an unlocking instruction. In response to the communication device of the controlled apparatus 120 receiving the unlocking instruction, at least one processor of at least one controlled apparatus enables an input permission of the editable area on the sub-block page 800 to receive input from students through the editable area.

In another embodiment, the main block page 700 has a designated area, and the sub-block pages 800 and 900 have editable areas corresponding to the designated area. The management apparatus 110 performs an unlocking operation on the designated area on the main block page 700, and sends an unlocking instruction. In response to the two controlled apparatuses 120 receiving the unlocking instruction, the input permissions of the editable areas on the sub-block pages 800 and 900 are enabled to receive a user input through the editable areas.

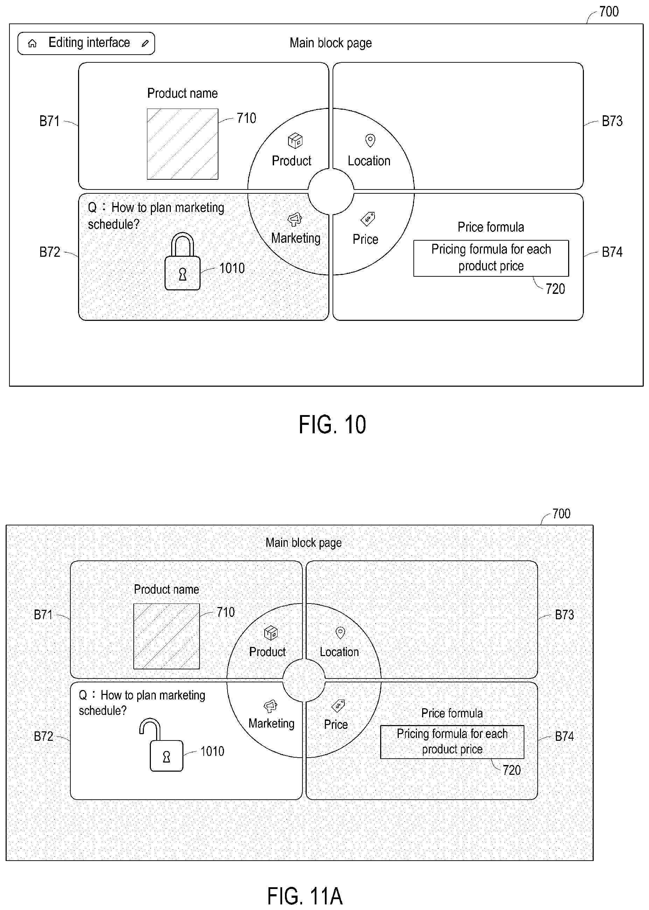

FIG. 10 is a schematic diagram of the main block page according to an embodiment of the disclosure. FIG. 11A to FIG. 11C are schematic diagrams of the behavior change according to an embodiment of the disclosure. In this embodiment, the block B72 on the main block page 700 is a designated area, and the designated area has a locking function, with an option 1010 corresponding to the locking function displayed in the block B72.

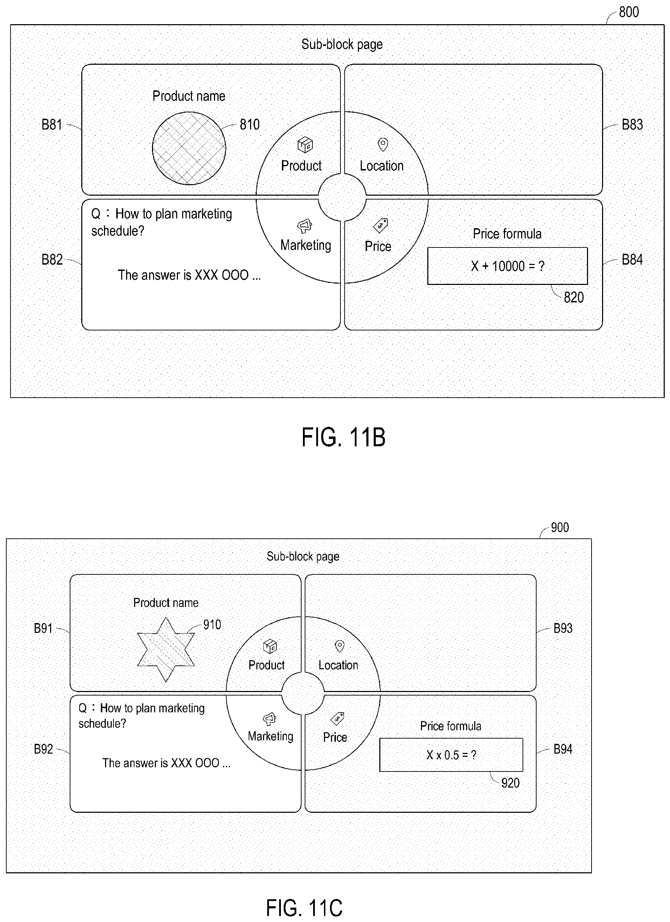

The locking function makes it possible to temporarily restrict (lock) the block B72 from being edited, thereby preventing any behavior change (such as adding or editing any object) from being performed on the block B72. In actual applications, assuming that the teacher needs each group to discuss and provide answers in limited time at a certain stage of the lecture, the teacher may click on the option 1010 on the main block page 700 to unlock the block B72, as shown in FIG. 11A. In response to the unlocking operation of the block B72, an unlocking instruction is sent to two controlled apparatuses 120 to synchronously unlock the blocks B82 and B92, as shown in FIG. 11B and FIG. 11C. The students may then add or edit content in the blocks B82 and B92.

Afterward, when the timed answering period ends, the teacher may lock (for example, clicking on the option 1010 again) the block B72 on the main block page 700, causing the corresponding blocks B82 and B92 on the sub-block pages 800 and 900 to be locked, thereby preventing any further addition or editing of the content in the blocks B82 and B92.

Referring again to FIG. 11A to FIG. 11C, in an embodiment, in a case of using the remote control method and the remote control system, the display of the management apparatus 110 displays the main block page 700 shown in FIG. 11A, while the display of the controlled apparatus 120 for the first group displays the sub-block page 800 shown in FIG. 11B. Furthermore, the display of the controlled apparatus 120 for the second group displays the sub-block page 900 shown in FIG. 11C. For example, when the teacher selects (performs a behavior change) the controllable object 710 (for example, an image with a hyperlink) on the main block page 700, the controlled object 810 (for example, an image with a hyperlink) on the sub-block page 800 is also selected (undergoes the behavior change). Additionally, the controlled object 910 (for example, an image with a hyperlink) on the sub-block page 900 is also selected. As a result, after the behavior change, the main block page 700 displayed on the display of the management apparatus 110 is different from the sub-block page 800 displayed on the display of the controlled apparatus 120 for the first group. Furthermore, after the behavior change, the main block page 700 displayed on the display of the management apparatus 110, the sub-block page 800 displayed on the display of the controlled apparatus 120 for the first group, and the sub-block page 900 displayed on the display of the controlled apparatus 120 for the second group are all different from one another.

In an extended application of another embodiment, when the teacher finishes the course, the teacher may further use a sharing function in the course editing interface 600 to send the sub-block pages 800 and 900 from this meeting to the first group and the second group according to the invitation codes of the first group and the second group. For example, multiple email addresses corresponding to the first group and the second group may be preset in the cloud server 130. When enabling the sharing function in the course editing interface 600 through the management apparatus 110, the cloud server 130 sends the content corresponding to the sub-block page 800 to the email addresses corresponding to the first group, and sends the content corresponding to the sub-block page 900 to the email addresses corresponding to the second group.

In an embodiment, the manager may create a teaching material file through the management apparatus 110 using the management account information thereof.

In summary, the remote control method and the remote control system disclosed herein may, after triggering a behavior change on the main block page, correspondingly control the sub-block page associated with the main block page to perform the same behavior change. Specifically, a linkage relationship may be established between objects on the main block page and the sub-block page, causing the sub-block page to undergo a corresponding behavior change in response to the behavior change on the main block page.

In actual applications, the disclosure provides a more convenient operation mode for the teacher. The teacher may enable one or more sub-block pages to synchronously perform the same operation simply by performing the operation on the main block page. This may save the teacher's time during teaching, and improves the smoothness of teaching and convenience. The behavior changes performed on the student side may also be fed back to the teacher side, for the teacher to see the students' answers in real-time (for example, during timed answering).

The foregoing description of the preferred embodiments of the disclosure has been presented for purposes of illustration and description. It is not intended to be exhaustive or to limit the disclosure to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the disclosure and its best mode practical application, thereby to enable persons skilled in the art to understand the disclosure for various embodiments and with various modifications as are suited to the particular use or implementation contemplated. It is intended that the scope of the disclosure be defined by the claims appended hereto and their equivalents in which all terms are meant in their broadest reasonable sense unless otherwise indicated. Therefore, the term "the invention", "the present invention" or the like does not necessarily limit the claim scope to a specific embodiment, and the reference to particularly preferred exemplary embodiments of the disclosure does not imply a limitation on the disclosure, and no such limitation is to be inferred. The disclosure is limited only by the spirit and scope of the appended claims. Moreover, these claims may refer to use "first", "second", etc. following with noun or element. Such terms should be understood as a nomenclature and should not be construed as giving the limitation on the number of the elements modified by such nomenclature unless specific number has been given. The abstract of the disclosure is provided to comply with the rules requiring an abstract, which will allow a searcher to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the disclosure. It should be appreciated that variations may be made in the embodiments described by persons skilled in the art without departing from the scope of the disclosure as defined by the following claims. Moreover, no element and component in the present disclosure is intended to be dedicated to the public regardless of whether the element or component is explicitly recited in the following claims.

## Claims

1. A remote control method, comprising:
displaying (S205) a main block page (700) through a management apparatus (110);
sending (S210) a control instruction through the management apparatus (110) in response to the management apparatus (110) performing a behavior change on a first object on the main block page (700);
displaying (S215) a sub-block page through a controlled apparatus (120), wherein the main block page (700) and the sub-block page (800, 900) comprise a linkage relationship, and the sub-block page comprises a second object associated with the first object; and
performing the (S220) behavior change on the second object on the sub-block page (800, 900) through the controlled apparatus (120) in response to the controlled apparatus (120) receiving the control instruction.

2. The remote control method according to claim 1, further comprising:
sending (S307) an invitation code corresponding to the sub-block page (800, 900) by the management apparatus (110);
requesting (309) to obtain the sub-block page (800, 900) according to the invitation code by the controlled apparatus (120); and
displaying the sub-block page (800,900) through the controlled apparatus (120).

3. The remote control method according to claim 1 or 2, further comprising executing a remote control program through the management apparatus to:
create (S301) the main block page (70), wherein the main block page (700) comprises a plurality of controllable objects (710, 720);
create (S303) the sub-block page (800, 900) with the same architecture as the main block page (700), and respectively generate a plurality of controlled objects (710, 720) based on the controllable objects (710, 720), wherein types of the controlled objects (710, 720) respectively correspond to types of the controllable objects (710, 720);
generate (S303) an invitation code corresponding to the sub-block page (800, 900); and
establish (S305) the linkage relationship between the sub-block page (800, 900)and the main block page (700), so that the controlled objects (710, 720)are respectively associated with the controllable objects (710, 720), wherein the first object is one of the controllable objects (710, 720), and the second object is one of the controlled objects (710, 720).

4. The remote control method according to claim 3, further comprising:
creating a plurality of sub-block pages (800, 900) corresponding to a plurality of groups, through the management apparatus (110),
wherein content of the controlled objects (710, 720) included on one of the sub-block pages (800, 900) is different from content of the controlled objects (710, 720) included on another sub-block page (800, 900).

5. The remote control method according to any one of the preceding claims, wherein the behavior change comprises at least one of adjustment of an object position, adjustment of an object size, adjustment of a font format, and triggering of a hyperlink.

6. The remote control method according to any one of the preceding claims, wherein a designated area is set on the main block page (700), the sub-block page (800, 900) comprises an editable area corresponding to the designated area, and the remote control method further comprises:
performing an unlocking operation on the designated area on the main block page (700) through the management apparatus (110), and sending an unlocking instruction through the management apparatus (110); and
enabling an input permission of the editable area on the sub-block page (800, 900) through the controlled apparatus (120) in response to the controlled apparatus (120) receiving the unlocking instruction, to receive a user input through the editable area.

7. The remote control method according to any one of the preceding claims, further comprising:
providing a collaboration platform interface through a cloud server (130);
inputting (S401) management account information through the management apparatus (110) to log in (S404) to the collaboration platform interface of the cloud server (130), and through the collaboration platform interface in the management apparatus (110), enabling the cloud server (130) to read and execute a remote control program stored in the cloud server (130) to:
create the main block page (700) and the sub-block page (800, 900), and generate an invitation code corresponding to the sub-block page (800, 900);
store the main block page (700), the sub-block page (800, 900), and the invitation code in the cloud server (130);
send the invitation code to the controlled apparatus (120) through the cloud server (130);
request to obtain the sub-block page (800, 900) according to the invitation code through the controlled apparatus (120);
display (S413) the sub-block page (800, 900) according to the invitation code through the controlled apparatus (120); and
display (S415) the main block page (700) through the management apparatus (110).

8. A remote control system, comprising:
a management apparatus (110) comprising at least one first processor, a first display, and a first communication device, wherein the at least one first processor is electrically connected to the first display and the first communication device respectively, wherein
the first display is configured to display a main block page (700), and in response to the at least one first processor of the management apparatus (110) being configured to perform a behavior change (S417) on a first object on the main block page (700), the first communication device of the management apparatus (110) is configured to send a control instruction; and
at least one controlled apparatus (120) comprising at least one second processor, a second display, and a second communication device, wherein the at least one second processor is electrically connected to the second display and the second communication device respectively, wherein
the second display is configured to display a sub-block page (800, 900), wherein the main block page (700) and the sub-block page (800, 900) comprise a linkage relationship, and the sub-block page (800, 900) comprises a second object associated with the first object, and in response to the second communication device of the at least one second controlled apparatus (120) being configured to receive the control instruction, the at least one second processor is configured to perform the behavior change (S417) on the second object on the sub-block page (800, 900).

9. The remote control system according to claim 8, wherein the first communication device of the management apparatus is configured to send an invitation code corresponding to the sub-block page (800, 900), the at least one controlled apparatus (120) is configured to request to obtain the sub-block page (800, 900) according to the invitation code, and the second display of the at least one controlled apparatus (120) is configured to display the sub-block page (800, 900).

10. The remote control system according to claim 8 or 9, wherein the at least one first processor of the management apparatus (110) is configured to execute a remote control program to:
create the main block page (700), wherein the main block page (700) comprises a plurality of controllable objects (710, 720);
create the sub-block page (800, 900) with the same architecture as the main block page (700), and generate a plurality of controlled objects (710, 720) based on the controllable objects (710, 720), wherein types of the controlled objects (710, 720) respectively correspond to types of the controllable objects (710, 720);
generate an invitation code corresponding to the sub-block page (800, 900); and
establish the linkage relationship between the sub-block page (800, 900) and the main block page (700), so that the controlled objects (710, 720) are respectively associated with the controllable objects,
wherein the first object is one of the controllable objects (710, 720), and the second object is one of the controlled objects (710, 720).

11. The remote control system according to claim 10, wherein the at least one first processor of the management apparatus (110) is configured to execute the remote control program to further:
create a plurality of sub-block pages (800, 900) corresponding to a plurality of groups,
wherein content of the controlled objects (710, 720) included on one of the sub-block pages (800, 900) is different from content of the controlled objects (710, 720) included on another sub-block page (800, 900).

12. The remote control system according to any one of claims 8, 9, 10 or 11 wherein the behavior change comprises at least one of adjustment of an object position, adjustment of an object size, adjustment of a font format, and triggering of a hyperlink.

13. The remote control system according to any one of claims 8, 9, 10, 11 or 12, wherein a designated area is set on the main block page (700), and the sub-block page (800, 900) comprises an editable area corresponding to the designated area,
the at least one first processor of the management apparatus (110) is configured to perform an unlocking operation on the designated area on the main block page (700), and the first communication device of the management apparatus (110) is configured to send an unlocking instruction, and
in response to the second communication device of the at least one controlled apparatus (120) being configured to receive the unlocking instruction, the at least one second processor of the at least one controlled apparatus (120) is configured to enable an input permission of the editable area on the sub-block page (800, 900), to receive a user input through the editable area.

14. The remote control system according to claim 8, further comprising a cloud server (130), wherein the cloud server (130) comprises at least one third processor, a third storage, and a third communication device, and the at least one third processor is electrically connected to the third storage and the third communication device respectively, wherein
the cloud server (130) is configured to provide a collaboration platform interface, and
the cloud server (130) is communicatively connected to the management apparatus (110) and the at least one controlled apparatus (120) respectively,
wherein the management apparatus (110) is configured to input management account information to log in to the collaboration platform interface of the cloud server (130), and the cloud server (130) is configured to read and execute a remote control program stored in the third storage of the cloud server (130) to:
create the main block page (700) and the sub-block page (800, 900), and generate an invitation code corresponding to the sub-block page (800, 900); and
store the main block page (700), the sub-block page (800, 900), and the invitation code in the third storage of the cloud server (130);
the third communication device of the cloud server (130) sends the invitation code to the controlled apparatus (120);
the controlled apparatus (120) requests to obtain the sub-block page (800, 900) according to the invitation code;
the second display of the controlled apparatus (120) displays the sub-block page (800, 900) according to the invitation code; and
the first display of the management apparatus (110) displays the main block page (700).

15. A non-transitory processor-readable storage medium, wherein the non-transitory processor-readable storage medium is readable by at least one processor and configured to store a remote control program, and the at least one processor is configured to read and execute the remote control program to:
display a main block page (700) through a management apparatus (110);
send a control instruction through the management apparatus (110) in response to the management apparatus performing (110) a behavior change on a first object on the main block page (700);
display a sub-block page (800, 900) through a controlled apparatus (120), wherein the main block page (700) and the sub-block page (800, 900) have a linkage relationship, and the sub-block page (800, 900) comprises a second object associated with the first object; and
perform the behavior change on the second object on the sub-block page (800, 900) in response to the controlled apparatus (120) receiving the control instruction.
